# EUROPEAN PATENT APPLICATION

(11) **EP 3 211 555 A1**
(43) Date of publication of application: **30.08.2017**
(21) Application number: 16157290.4
(22) Date of filing: 25.02.2016
(51) Int. Cl.: G06F 21/32, H04L 29/06, H04W 12/08

(54) **AN APPARATUS AND ASSOCIATED METHODS**

(71) Applicant: Nokia Technologies Oy, 02610 Espoo (FI)
(72) Inventor: Roennow, Troels F, Cambridge, CB2 9BG (GB); Li, Hongwei, Cambridge, CB4 1RY (GB); Bitauld, David, Cambridge, CB5 8DR (GB); Lehtiniemi, Arto, 33880 Lempäälä (FI)
(74) Representative: Potter Clarkson LLP

(57) **Abstract**

An apparatus configured to:
in respect of an electronic device configured such that biometric authentication of the identity of a user is used to determine whether or not the user is a registered user and to correspondingly provide or deny access to the user for operation of the electronic device;
based on signalling indicating that a non-registered user is operating the electronic device and signalling received from a biometric wearable remote electronic device worn by a biometrically authenticated registered user, provide for access to the non-registered user for operation of the electronic device in accordance with said signalling from the remote electronic device.

## Description

### Technical Field

The present disclosure relates to the field of electronic devices having biometric access control. Associated methods, computer programs and apparatus is also disclosed. Certain disclosed aspects/examples relate to electronic devices and remote electronic devices that operate together to grant access to the electronic device to non-biometrically-authenticated-users.

### Background

The listing or discussion of a prior-published document or any background in this specification should not necessarily be taken as an acknowledgement that the document or background is part of the state of the art or is common general knowledge. One or more aspects/examples of the present disclosure may or may not address one or more of the background issues.

### Summary

In a first example aspect there is provided an apparatus comprising:
at least one processor; and
at least one memory including computer program code,
the at least one memory and the computer program code configured to, with the at least one processor, cause the apparatus to perform at least the following:
   in respect of an electronic device configured such that biometric authentication of the identity of a user is used to determine whether or not the user is a registered user and to correspondingly provide or deny access to the user for operation of the electronic device;
   based on signalling indicating that a non-registered user is operating the electronic device and signalling received from a biometric wearable remote electronic device worn by a biometrically authenticated registered user, provide for access to the non-registered user for operation of the electronic device in accordance with said signalling from the remote electronic device.

In one or more examples, the apparatus is configured provide for access to the non-registered user for operation of the electronic device in accordance with said signalling where said signalling from the biometric wearable remote electronic device comprises one or more of;
an access-level message received from the biometric wearable remote electronic device indicating a user selection of the biometrically authenticated registered user; and
a determined distance between the electronic device and the biometric wearable remote electronic device worn by the biometrically authenticated registered user.

In one or more embodiments, the electronic device is configured to biometrically authenticate the identity of a user by at least one or more of; comparison to a stored profile of one or more of facial features, eye features, iris features, retina features, a fingerprint, skin features, a subdermal image, a blood vessel pattern, a heart rhythm, a gait and speech.

In one or more embodiments, the electronic device provides a plurality of levels of access to the user, the plurality of levels including at least two or more of;
i) full access to the electronic device;
ii) access to a subset of a plurality of applications available for use at the electronic device;
iii) access to a predetermined application available for use at the electronic device;
iv) access to files available at the electronic device on a read-only basis;
v) access to one or more classes of application available for use at the electronic device; and
vi) no access to the electronic device
the apparatus is configured to, in response to the access-level message and/or the determined distance, provide for access in accordance with at least one of the plurality of levels of access.

In one or more embodiments, where access is provided based on the access-level message, provide for access in accordance with one of a plurality of different levels (such as the levels mentioned above) of access or to provide or deny access in accordance with an indication present in the access-level message.

In one or more embodiments, where access is provided based on the determined distance between the electronic device and the remote electronic device, provide for a change in the access provided, in accordance with one of a plurality of different levels of access or to provide or deny access, based on the determined distance passing a predetermined distance threshold.

In one or more embodiments, the predetermined distance is based on a signal strength of messages sent between the remote electronic device and the electronic device.

In one or more embodiments, where access is provided based on the determined distance between the electronic device and the remote electronic device, provide for
i) a first level of access when the determined distance is less than a first predetermined distance threshold;
ii) a second level of access different to the first when the determined distance is between the first predetermined distance threshold and a second predetermined distance threshold;
iii) a third level of access different to the first and second levels of access or prompting of the registered user via the remote electronic device for a user-desired level of access when the determined distance is greater than the second predetermined distance threshold.

In one or more embodiments, said signalling indicating that a non-registered user is operating the electronic device comprises one or more of;
signalling indicating that the or each biometrically authenticated, registered user is more than a predetermined distance from the electronic device while the electronic device is being used;
signalling indicating that a hand wearable biometric remote electronic device associated with the registered user is not moving in accordance with user input provided to the electronic device;
signalling indicating that a captured image of a current user of the electronic device is not the registered user; and
signalling indicating that captured biometric information of a current user of the electronic device has not been authenticated as being a registered user.

In one or more embodiments, the apparatus is configured to provide for prompting of the registered user via their remote electronic device to provide an indication of the particular level of access to apply to the use by the non-registered user and based on a response to said prompting, provide access to the non-registered user in accordance with the level of access indicated in the response.

In one or more embodiments, the signalling received from the remote electronic device comprises authenticated messages that can be used to confirm the source of the signalling is the biometrically authenticated registered user and/or the remote electronic device of the biometrically authenticated registered user.

In one or more embodiments, the access-level message received from the remote electronic device; and/or a message received from the remote electronic device used in the determination of the distance between the electronic device and the remote electronic device comprise authenticated messages that confirm the source of the message is the biometrically authenticated registered user and/or the remote electronic device of the biometrically authenticated registered user.

In one or more embodiments, the non-registered user has a remote electronic device associated with them able to provide a unique identity and the provision of access to the non-registered user for operation of the electronic device is further based on the continued detection of the remote electronic device of the non-registered user. In one or more embodiments, the remote electronic device of the non-registered user is a biometric wearable remote electronic device.

In one or more embodiments, wherein biometric authentication of the wearer of the remote electronic device is performed, in part, at the electronic device based on the signalling received from the remote electronic device or the signalling received from the biometric wearable remote electronic device includes information that enables the electronic device to verify that the wearer of the remote electronic device is a registered user of the electronic device who has been biometrically authenticated. The signalling received from the remote electronic device may be indicative of the successful biometric authentication of the registered user.

In a second aspect there is provided an apparatus comprising:
at least one processor; and
at least one memory including computer program code,
the at least one memory and the computer program code configured to, with the at least one processor, cause the apparatus to perform at least the following:
   in respect of an electronic device configured such that biometric authentication of the identity of a user is used to determine whether or not the user is a registered user and to correspondingly provide or deny access to the user for operation of the electronic device;
   based on receipt of a prompt from the electronic device indicative of use of the electronic device by a non-registered user and biometric authentication of a wearer of a biometric wearable remote electronic device as a registered user of the electronic device, provide for sending of a message to the electronic device from the biometric wearable remote electronic device for use in providing access to the non-registered user of said electronic device for operation of the electronic device.

In one or more embodiments, said message has one or more of the following characteristics;
said message comprising an access-level message and containing an indication from the registered user that access should be provided to the non-registered user;
said message comprises geographic location information or its form provides for a distance between the electronic device and the remote electronic device to be determined.

In one or more embodiments, the remote electronic device is configured to provide for the sending of the message on authentication of the identity of a registered user of the electronic device at a remote electronic device.

In one or more embodiments, the apparatus comprises a wearable apparatus, a biometric apparatus, a biometric wearable apparatus, a personal electronic device, a smart phone, a tablet or a module/circuitry for one or more of the same.

In a third aspect there is provided a method, the method comprising;
in respect of an electronic device configured such that biometric authentication of the identity of a user is used to determine whether or not the user is a registered user and to correspondingly provide or deny access to the user for operation of the electronic device;
based on signalling indicating that a non-registered user is operating the electronic device and signalling received from a biometric wearable remote electronic device worn by a biometrically authenticated registered user, providing for access to the non-registered user for operation of the electronic device in accordance with said signalling from the remote electronic device.

In one or more embodiments, said signalling from the remote electronic device comprises one or more of;
an access-level message received from the remote electronic device indicating a user selection of the registered user; and
a determined distance between the electronic device and the remote electronic device.

In a fourth aspect there is provided a method, the method comprising;
in respect of an electronic device configured such that biometric authentication of the identity of a user is used to determine whether or not the user is a registered user and to correspondingly provide or deny access to the user for operation of the electronic device;
based on receipt of a prompt from the electronic device indicative of use of the electronic device by a non-registered user and biometric authentication of a wearer of a biometric wearable remote electronic device, providing for the sending of a message to the electronic device from the biometric wearable remote electronic device for use in providing access to the non-registered user of said electronic device for operation of the electronic device.

In one or more examples, said message has one or more of the following characteristics;
said message comprising an access-level message and containing an indication from the registered user that access should be provided to the non-registered user;
said message comprises geographic location information or its form provides for a distance between the electronic device and the remote electronic device to be determined.

In a fifth aspect there is provided a computer readable medium comprising computer program code stored thereon, the computer readable medium and computer program code being configured to, when run on at least one processor, perform the method of;
in respect of an electronic device configured such that biometric authentication of the identity of a user is used to determine whether or not the user is a registered user and to correspondingly provide or deny access to the user for operation of the electronic device;
based on signalling indicating that a non-registered user is operating the electronic device and signalling received from a biometric wearable remote electronic device worn by a biometrically authenticated registered user, providing for access to the non-registered user for operation of the electronic device in accordance with said signalling from the remote electronic device.

In one or more examples, said signalling from the remote electronic device comprises one or more of;
an access-level message received from the remote electronic device indicating a user selection of the registered user; and
a determined distance between the electronic device and the remote electronic device.

In a sixth aspect there is provided a computer readable medium comprising computer program code stored thereon, the computer readable medium and computer program code being configured to, when run on at least one processor, perform the method of;
in respect of an electronic device configured such that biometric authentication of the identity of a user is used to determine whether or not the user is a registered user and to correspondingly provide or deny access to the user for operation of the electronic device;
based on receipt of a prompt from the electronic device indicative of use of the electronic device by a non-registered user and biometric authentication of a wearer of a biometric wearable remote electronic device, providing for the sending of a message to the electronic device from the biometric wearable remote electronic device for use in providing access to the non-registered user of said electronic device for operation of the electronic device.

In one or more examples, said message has one or more of the following characteristics;
said message comprising an access-level message and containing an indication from the registered user that access should be provided to the non-registered user;
said message comprises geographic location information or its form provides for a distance between the electronic device and the remote electronic device to be determined.

In a further aspect there is provided an apparatus, the apparatus comprising means configured to, in respect of an electronic device configured such that biometric authentication of the identity of a user is used to determine whether or not the user is a registered user and to correspondingly provide or deny access to the user for operation of the electronic device; based on signalling indicating that a non-registered user is operating the electronic device and signalling received from a biometric wearable remote electronic device worn by a biometrically authenticated registered user, provide for access to the non-registered user for operation of the electronic device in accordance with said signalling from the remote electronic device.

In a further aspect there is provided an apparatus, the apparatus comprising means configured to,
in respect of an electronic device configured such that biometric authentication of the identity of a user is used to determine whether or not the user is a registered user and to correspondingly provide or deny access to the user for operation of the electronic device;
based on receipt of a prompt from the electronic device indicative of use of the electronic device by a non-registered user and biometric authentication of a wearer of a biometric wearable remote electronic device as a registered user of the electronic device, provide for sending of a message to the electronic device from the biometric wearable remote electronic device for use in providing access to the non-registered user of said electronic device for operation of the electronic device.

The present disclosure includes one or more corresponding aspects, examples or features in isolation or in various combinations whether or not specifically stated (including claimed) in that combination or in isolation. Corresponding means and corresponding functional units (e.g., function enabler, image selector, amalgamated space former, virtual reality space renderer, virtual reality display renderer, user input receiver) for performing one or more of the discussed functions are also within the present disclosure.

Corresponding computer programs for implementing one or more of the methods disclosed are also within the present disclosure and encompassed by one or more of the described examples.

The above summary is intended to be merely exemplary and non-limiting.

### Brief Description of the Figures

A description is now given, by way of example only, with reference to the accompanying drawings, in which:
figure 1 illustrates an example apparatus embodiment;
figure 2 illustrates access provided to a non-registered user for operation of an electronic device based on a remote electronic of a registered user;
figure 3 illustrates an example remote electronic device;
figure 4 illustrates an example of relative location of the electronic device and the remote electronic device being used to control access by a non-registered user to the electronic device;
figure 5 illustrates an example method;
figure 6 illustrates an example method; and
figure 7 illustrates a computer readable medium.

### Description of Example Aspects

Electronic devices may be configured to only provide access for operation of the electronic device to biometrically authenticated registered users. If a non-registered user attempts to operate the electronic device they may be prohibited from doing so. For example, the electronic device may lock itself and may present a lock screen or may only provide limited functionality until the user is authenticated as a registered user. The electronic device may be configured to determine whether or not a user of the electronic device is a registered user by way of a further, separate biometric wearable electronic device remote from the electronic device (termed "biometric wearable remote electronic device" hereinafter), said remote electronic device portable and personal to the registered user. The remote electronic device is, in this example, configured to be worn by the registered user. Further the remote electronic device may include biometric sensors or biometric authentication functionality to biometrically authenticate its wearer. It will be appreciated that the biometric authentication process may or may not be performed exclusively by a processor(s) of the remote electronic device and the biometric authentication of the wearer may be performed in combination with the electronic device. Examples of wearable remote electronic devices include smart rings, smart wrist bands or other wearables.

As mentioned above, the remote electronic device may have identity authentication features itself to biometrically authenticate the identity of the user/wearer of the wearable remote electronic device. Said remote electronic device may then securely communicate, such as wirelessly, with the electronic device to enable the electronic device to determine if its current user is an (authenticated) registered user. If the biometric wearable remote electronic device has authentication features then the electronic device may presume the wearer is the registered user by virtue of appropriate secure communication.

An electronic device configured in this way conveniently enables a registered user to log in/use the electronic device but would typically prevent anyone else to use it. However, in some circumstances, the registered user (for example, the owner) of the electronic device would like to let a second user (such as a friend or his/her children) to use the electronic device, possibly with full or limited access to the electronic device. However, an electronic device configured as described above would not recognize the second user as a registered user (assuming they were not registered themselves) and would lock/limit access to the electronic device.

Here, we propose an apparatus and method that would allow a registered user (e.g. owner) of a biometrically authenticated user-identity-access-controlled electronic device to give partial or full access to a second, non-registered user. The level of access could be set by the biometrically authenticated registered user and/or could be dependent on the distance of the biometrically authenticated owner from the electronic device.

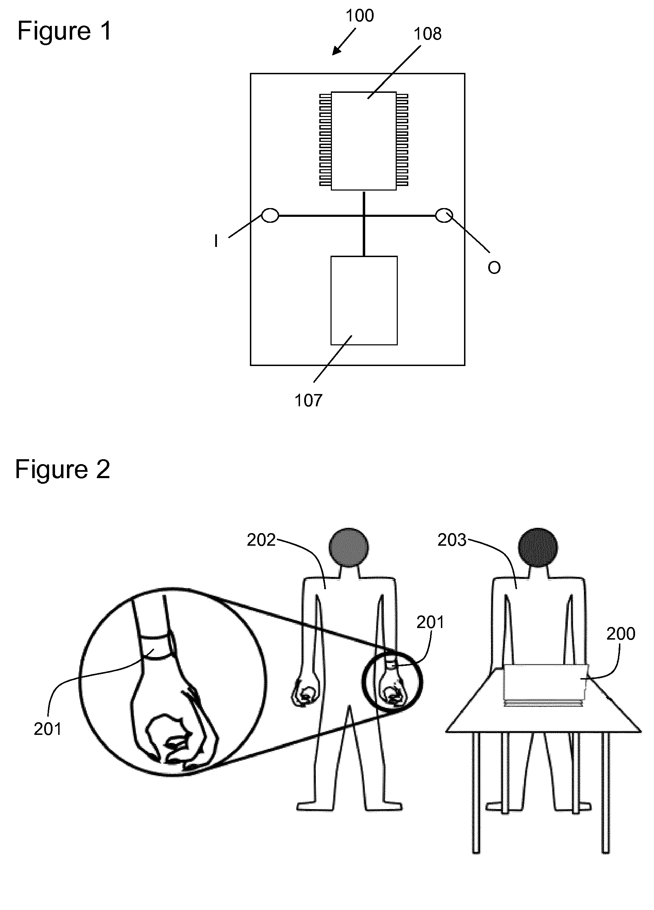

Figure 1 shows an apparatus 100 comprising memory 107, a processor 108, input I and output O. In this embodiment only one processor and one memory are shown but it will be appreciated that other embodiments may utilise more than one processor and/or more than one memory (e.g. same or different processor/memory types).

In this embodiment the apparatus 100 is an Application Specific Integrated Circuit (ASIC) for a portable electronic device with a touch sensitive display. In other embodiments the apparatus 100 can be a module for such a device, or may be the device itself, wherein the processor 108 is a general purpose CPU of the device and the memory 107 is general purpose memory comprised by the device.

The input I allows for receipt of signalling to the apparatus 100 from further components, such as components of a portable electronic device (like a touch-sensitive or hover-sensitive display) or the like. The output O allows for onward provision of signalling from within the apparatus 100 to further components such as the user-identity-access-controlled electronic device, a display screen, speaker, or vibration module. In this embodiment the input I and output O are part of a connection bus that allows for connection of the apparatus 100 to further components.

The processor 108 is a general purpose processor dedicated to executing/processing information received via the input I in accordance with instructions stored in the form of computer program code on the memory 107. The output signalling generated by such operations from the processor 108 is provided onwards to further components via the output O.

The memory 107 (not necessarily a single memory unit) is a computer readable medium (solid state memory in this example, but may be other types of memory such as a hard drive, ROM, RAM, Flash or the like) that stores computer program code. This computer program code stores instructions that are executable by the processor 108, when the program code is run on the processor 108. The internal connections between the memory 107 and the processor 108 can be understood to, in one or more example embodiments, provide an active coupling between the processor 108 and the memory 107 to allow the processor 108 to access the computer program code stored on the memory 107.

In this example the input I, output O, processor 108 and memory 107 are all electrically connected to one another internally to allow for electrical communication between the respective components I, O, 107, 108. In this example the components are all located proximate to one another so as to be formed together as an ASIC, in other words, so as to be integrated together as a single chip/circuit that can be installed into an electronic device. In other examples one or more or all of the components may be located separately from one another.

Figure 2 shows an electronic device 200 comprising a laptop computer. It will be appreciated that the electronic device 200 may be of a different type such as a tablet computer, a smartphone or smart watch or other electronic device. The electronic device 200 may be configured with user accounts, which may be personal to particular users. A user who is registered to use the electronic device may be required to biometrically authenticate themselves to the electronic device before the device will allow them access for operation thereof. Thus, depending on the result of the authentication process and thereby whether or not the user is a registered user, the electronic device may correspondingly provide or deny access to the user for operation of the electronic device 200.

A registered user can gain access to the electronic device by way of biometric based authentication. Biometric authentication may use human characteristics to determine whether or not the user is a registered user. For example, the electronic device may be configured to capture an image of the user and compare facial features to a stored facial profile for authentication. In other examples, characteristics of one or more of the following may be used by the electronic device to authenticate a user, an eye, a face, an iris, a fingerprint, a subdermal image, a blood vessel pattern, a heart rhythm, a gait and speech. Additionally, the registered user may gain access to the electronic device by way of a password or other non-biometric means.

If the user is registered, the electronic device may provide access to various applications installed on or available from the electronic device and/or to files stored on or available from the electronic device (belonging to the registered user or all files depending on privileges). If the user is not authenticated as a registered user, the electronic device may lock itself/remain locked and/or may present a message informing the user that access has not been allowed and/or may provide only a reduced level of access compared to a registered user.

Figure 2 further shows a remote electronic device 201. The remote electronic device 201 is configured to wirelessly communicate with the electronic device 200 and can be used to biometrically authenticate a user to the electronic device 200. The remote electronic device 201, in this example, is configured to provide for control of access to the electronic device for operation by non-registered users. In other examples, the communication may be wired. The remote electronic device 201, in this example, comprises a wearable device and, in particular, a biometric wearable device. Thus, the biometric wearable device 201 may be configured to capture a fingerprint or heart rhythm (or other biometric characteristic as mentioned above) and, either locally or via the electronic device 200 or via a cloud based service, biometrically authenticate its wearer as a registered user. The wearable device may comprise a hand-worn, wrist-worn or finger worn wearable device. The remote electronic device 201 and electronic device 200 may be configured to wirelessly communicate via any appropriate standard such as Bluetooth, WiFi, Zigbee, Near Field Communication or Infrared. The communication may be encrypted.

Figure 2 shows a first user 202, who is registered to use the electronic device 200. The user 202 may be the owner of the electronic device 200. The first user 202 may use the remote electronic device 201 to gain access to the electronic device 200 by virtue of appropriate communication between the remote electronic device and the electronic device. A second user 203 is also shown attempting to operate the electronic device 200. The second user is a non-registered user with respect to the electronic device 200 and therefore the electronic device may automatically deny/limit access to the second user 203. For example, a measurement of a biometric characteristic of the second user 203 by the electronic device 200 (or a peripheral thereof) may not correlate with a stored record/profile of registered users of the electronic device.

The first user 202 may wish for the electronic device 200 to provide access to the second user 203 despite them not being registered to use the electronic device 200. Accordingly, the electronic device 200 may be configured to use the remote electronic device 201 of the registered user to determine whether or not to provide access to the second user 203. In some examples, the first user 202 may be required to be a particular class of user of the electronic device, such as an administrator, in order for the electronic device 200 to be able to grant access to others.

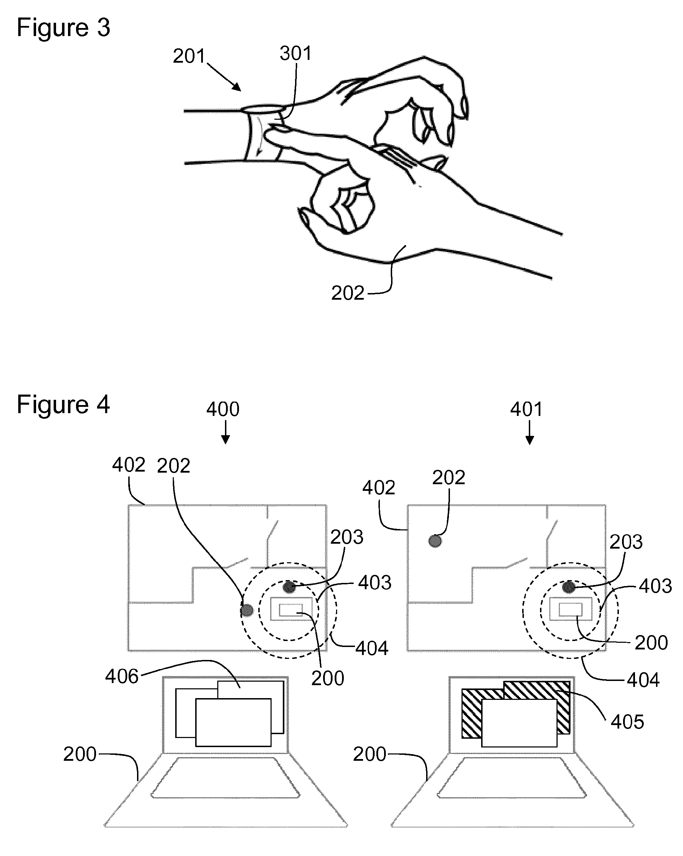

With reference to Figure 3, in some examples, the first user 202 may be able to provide user access instructions to the electronic device 200 via user input on the remote electronic device 201. Accordingly, on detection by the electronic device 200 that the user 203 is not a registered user, the first user 202 may be able to select whether or not the second user 203 should be provided with access. Upon selection the remote electronic device may send an access-level message indicating that the first user has allowed access to the second user. The wearer of the biometric wearable remote electronic device may be biometrically authenticated as a registered user before or as part of the sending of the access-level message or periodically by the wearable remote electronic device. Thus, the remote electronic device may biometrically authenticate the wearer locally or in combination with another apparatus/device or may send captured biometric information for authentication by the electronic device or determination by the electronic device on whether or not the wearer is a registered user by way of biometric authentication.

Detection by the electronic device 200 that the user 203 is not a registered user may be achieved in various ways. For example, the electronic device 200 may determine that the remote electronic device 201 is too far away from the electronic device 200 (e.g. a low strength communication signal is received lower than a threshold signal strength) for the person attempting to operate the electronic device to be the registered user. In other examples, it may be determined that the wearable, remote electronic device 201 does not move when the user is typing, which may be particularly applicable to wrist or finger based wearable remote electronic devices. In other examples, keystroke or behaviour pattern of the second user is not in accordance with a predetermined user profile of registered users.

In some example, different levels of access may be provided and, via the remote electronic device 201, the registered user may be able to select the level of access to apply for operation by the second user. Figure 3 shows an example wrist wearable remote electronic device 201 having a touch sensitive display 301. The display may present for selection a plurality of access options to provide to the second user 203, such as "full access", "limited access" or "no access". Upon selection, signalling may be sent to the electronic device 200 (by way of an access-level message) to effect the selection and provide the selected level of access/deny access. It will be appreciated that the remote electronic device, may authenticate its wearer and provide user information/authentication information as well as the selection of the access option. Thus, such a process may ensure that the person making the selection is the person with authority to grant those access rights.

Full access may provide access to the electronic device substantially as available to the first user 202. Limited access may provide only a subset of the applications available at the electronic device for use by the second user. Limited access may limit read and/or write access to the files stored or accessible via the electronic device. "No access" may provide for denying access to the electronic device 200. It will be appreciated that various levels access may be provided by the electronic device 200 and therefore said levels may be available for selection on the remote electronic device 201.

For example, a plurality of levels of access may be provided including at least two or more of;
i) full access to the electronic device;
ii) access to a subset of a plurality of applications available for use at the electronic device;
iii) access to a predetermined application available for use at the electronic device;
iv) access to files available at the electronic device on a read-only basis;
v) access to one or more classes of application available for use at the electronic device such as word processing applications, web browsing applications, or messaging applications or other classes
vi) no access (i.e. deny access).

In one or more examples, the electronic device 200 may be configured such that upon detection that the user is not a registered user (such as failed biometric authentication), the electronic device may identify remote electronic devices 201 of nearby registered users (within a distance threshold) and prompt them, via the remote electronic device, to make a selection. In other examples, the electronic device may send one or more messages to one or more remote electronic devices of registered user(s) in order to prompt them for a selection of the access to provide to the non-registered user 203. In one or more examples, the selection of the access rights made at the remote electronic device, may be provided to the electronic device 200 prior to attempted access by the second user 203 or prior to determination that the user is not registered. Accordingly, access may be granted to persons about to operate the electronic device 200. The electronic device 200 may be configured to provide a time limited period after receipt of the selection from the remote electronic device in which to accept non-registered user use in accordance with the selected access level. This may prevent access to the electronic device 200 indefinitely following selection by the biometrically authenticated registered user.

In one or more examples, the access rights granted by the access-level message may be personally associated with the second user 203. Thus, the electronic device 200 may be configured to capture (temporarily or permanently) biometric information about the second user and therefore access rights granted by the first user 202 may be linked to the second user.

In one or more examples, the electronic device 200 may be configured to use a determined distance between the electronic device 200 and the remote electronic device 201 to determine whether or not to provide access or the access level to provide to a non-registered user. The distance between the electronic device 200 and the first user 202 or their remote electronic device 201 may be determined by any appropriate means. For example, a one or more messages may be exchanged between the electronic device 200 and the remote electronic device that are transmitted at a predetermined signal strength and the attenuation of the signal is used to approximate a distance between the electronic device 200 and the remote electronic device. Alternatively, an absolute geographic position may be determined by the electronic device 200 and the remote electronic device 201 and by way of sending of this geographic location information to the electronic device 200 and/or to the remote electronic device 201, a separation distance may be determined. It will be appreciated that other distance determination techniques may be used. As part of this message exchange or within a predetermined period thereof the biometric wearable remote electronic device may biometrically authenticate its wearer to ensure they are a registered user of the electronic device.

In some examples, the decision on whether or not to provide access to second user 203 for operation of the electronic device 200 is based on the determined distance between the electronic device 200 and the remote electronic device 201 relative to a distance threshold. Thus, if the registered first user 202 is within a few metres of the electronic device 200, for example, full access may be provided to the second user 203. However, if the registered user 202 moves beyond a threshold distance, the electronic device may reduce the level of access available or deny access previously granted to the second user 203. In some examples, if the first user 202 goes beyond the threshold distance the electronic device/remote electronic device may, via a user interface on the remote electronic device, prompt the first user 202 for selection of a level of access to provide to the second user, similar to the examples above. Thus, the remote electronic device may present a notification on its display or a warning vibration to the wearer for user input to determine if he wants to leave a certain amount of access while he/she is away. If no selection is made within a predetermined wait period or no access-level message is received, the electronic device may reduce/deny access to the non-registered user 203.

Figure 4 shows a first situation 400 on the left hand side and a second situation 401 on the right hand side. Each situation shows an example floor plan 402 with the geographic location of the first and second users 202, 203 marked thereon as well as the electronic device 200. The first user 202 may use the remote electronic device 201 to gain access to the electronic device 200 by virtue of appropriate communication between the remote electronic device and the electronic device. Each situation 400, 401 also shows an example screenshot of the electronic device 200 exemplifying the level of access provided in each situation.

The electronic device 200 has an established first threshold distance shown as dotted line 403 and a second threshold distance shown as dotted line 404, which may be predetermined or user set. When it is determined that the first, registered user is within the first threshold distance the electronic device 200 may automatically provide full access to the second user 203. In the first situation, the first user 203 has moved beyond the first threshold distance 403 but is within the second threshold distance 404. With this geographic separation between the electronic device 200 and remote electronic device 201, the electronic device may be configured to provide a reduced level of access, such as read-only access, for example. Alternatively, the electronic device 200 may provide for, via the remote electronic device, the prompting of the first user by a notification: what should be the level of access from now on? If there is no answer or access-level message received after some time (up to 10 seconds, 30 seconds, 1 minute, or other time period for example), the electronic device 200 may provide a reduced level of access. Otherwise the answer/access-level message received from the remote electronic device 201 is used to assign the access level to the second user 203.

As shown in the second situation 401, when the first user 202 goes further away such as into another room and beyond the second threshold distance 404, the question is prompted again. If there is no answer within a predetermined time, the electronic device 200 may deny further access. Otherwise the answer/access-level message received from the remote electronic device 201 is used to assign the access level to the second user 203. The screenshot in the second situation 401 shows some of the viewports 405 representing applications presented on the electronic device shaded to represent restricted access to those applications compared to the corresponding viewports 406 shown in the first situation 400.

It will be appreciated that a combination of biometrically authenticated registered user selections via the remote electronic device 201 and determined distance may be used by the electronic device 200 to determine the level of access provided for operation of the electronic device by the unregistered, second user 203.

As part of any communication between the electronic device 200 and the remote electronic device 201, biometric authentication of the first user 202 may be performed. For example, the remote electronic device may be configured to authenticate the first user 202 before accepting a selection of the level of access and/or sending the access-level message. The wearable remote electronic device may regularly or irregularly biometrically authenticate its wearer. Thus, the messages exchanged with the electronic device may be deemed to be biometrically authenticated if the biometric authentication was performed within a predetermined preceding period. Further, the electronic device 200 may provide instructions to request the biometric authentication process to be performed at the remote electronic device 201. Further, biometric data may be collected at the remote electronic device 201 but processing (to authenticate) of the biometric data may be performed at the electronic device 200 following (e.g. secure) transfer of the biometric data therebetween.

In one or more examples, the unregistered second user 203 may also possess a remote electronic device, which may be a biometric wearable device of the same type, but at least may provide a unique identity with which granted access rights can be linked. The remote electronic device of the second user may not be registered with the electronic device 200. Thus, the first registered user 202 may grant full or partial access to the owner of a particular remote electronic device. In this scenario the one or more remote electronic devices/wearables and the electronic device 200 may detect or discover one another and may communicate with each other according to a defined protocol. The electronic device 200 may detect which other remote electronic devices are in its vicinity and prompt the first user 202 via his/her remote electronic device whether or not or what level of access rights to grant to the one or more other remote electronic devices. The electronic device may monitor the location of the second user's remote electronic device to determine that the current user is the second user.

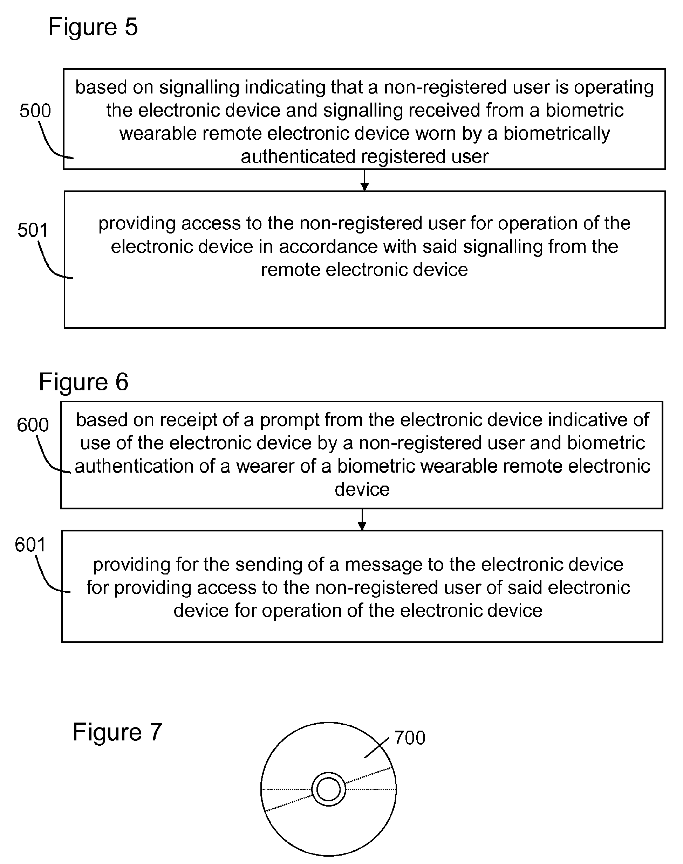

Figure 5 shows a flow diagram illustrating the steps of in respect of an electronic device configured such that biometric authentication of the identity of a user is used to determine whether or not the user is a registered user and to correspondingly provide or deny access to the user for operation of the electronic device; based on signalling indicating that a non-registered user is operating the electronic device and signalling received from a biometric wearable remote electronic device worn by a biometrically authenticated registered user, providing 501 for access to the non-registered user for operation of the electronic device in accordance with said signalling from the remote electronic device.

Figure 6 shows a flow diagram illustrating the steps of, in respect of an electronic device configured such that biometric authentication of the identity of a user is used to determine whether or not the user is a registered user and to correspondingly provide or deny access to the user for operation of the electronic device; based on 600 receipt of a prompt from the electronic device indicative of use of the electronic device by a non-registered user and biometric authentication of a wearer of a biometric wearable remote electronic device, providing 601 for the sending of a message to the electronic device from the biometric wearable remote electronic device for use in providing access to the non-registered user of said electronic device for operation of the electronic device.

Figure 7 illustrates schematically a computer/processor readable medium 700 providing a program according to an example. In this example, the computer/processor readable medium is a disc such as a digital versatile disc (DVD) or a compact disc (CD). In some examples, the computer readable medium may be any medium that has been programmed in such a way as to carry out an inventive function. The computer program code may be distributed between the multiple memories of the same type, or multiple memories of a different type, such as ROM, RAM, flash, hard disk, solid state, etc.

User inputs may be gestures which comprise one or more of a tap, a swipe, a slide, a press, a hold, a rotate gesture, a static hover gesture proximal to the user interface of the device, a moving hover gesture proximal to the device, bending at least part of the device, squeezing at least part of the device, a multi-finger gesture, tilting the device, or flipping a control device. Further the gestures may be any free space user gesture using the user's body, such as their arms, or a stylus or other element suitable for performing free space user gestures.

The apparatus shown in the above examples may be a portable electronic device, a laptop computer, a mobile phone, a Smartphone, a tablet computer, a personal digital assistant, a digital camera, a smartwatch, smart eyewear, a pen based computer, a non-portable electronic device, a desktop computer, a monitor, a household appliance, a smart TV, a server, a wearable apparatus, or a module/circuitry for one or more of the same.

Any mentioned apparatus and/or other features of particular mentioned apparatus may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/ functional units.

In some examples, a particular mentioned apparatus may be pre-programmed with the appropriate software to carry out desired operations, and wherein the appropriate software can be enabled for use by a user downloading a "key", for example, to unlock/enable the software and its associated functionality. Advantages associated with such examples can include a reduced requirement to download data when further functionality is required for a device, and this can be useful in examples where a device is perceived to have sufficient capacity to store such pre-programmed software for functionality that may not be enabled by a user.

Any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

Any "computer" described herein can comprise a collection of one or more individual processors/processing elements that may or may not be located on the same circuit board, or the same region/position of a circuit board or even the same device. In some examples one or more of any mentioned processors may be distributed over a plurality of devices. The same or different processor/processing elements may perform one or more functions described herein.

The term "signalling" may refer to one or more signals transmitted as a series of transmitted and/or received electrical/optical signals. The series of signals may comprise one, two, three, four or even more individual signal components or distinct signals to make up said signalling. Some or all of these individual signals may be transmitted/received by wireless or wired communication simultaneously, in sequence, and/or such that they temporally overlap one another.

With reference to any discussion of any mentioned computer and/or processor and memory (e.g. including ROM, CD-ROM etc), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/examples may consist of any such individual feature or combination of features. In view of the foregoing description it will be evident to a person skilled in the art that various modifications may be made within the scope of the disclosure.

While there have been shown and described and pointed out fundamental novel features as applied to examples thereof, it will be understood that various omissions and substitutions and changes in the form and details of the devices and methods described may be made by those skilled in the art without departing from the scope of the disclosure. For example, it is expressly intended that all combinations of those elements and/or method steps which perform substantially the same function in substantially the same way to achieve the same results are within the scope of the disclosure. Moreover, it should be recognized that structures and/or elements and/or method steps shown and/or described in connection with any disclosed form or examples may be incorporated in any other disclosed or described or suggested form or example as a general matter of design choice. Furthermore, in the claims means-plus-function clauses are intended to cover the structures described herein as performing the recited function and not only structural equivalents, but also equivalent structures. Thus although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

1. An apparatus comprising:
at least one processor; and
at least one memory including computer program code,
the at least one memory and the computer program code configured to, with the at least one processor, cause the apparatus to perform at least the following:
in respect of an electronic device configured such that biometric authentication of the identity of a user is used to determine whether or not the user is a registered user and to correspondingly provide or deny access to the user for operation of the electronic device;
based on signalling indicating that a non-registered user is operating the electronic device and signalling received from a biometric wearable remote electronic device worn by a biometrically authenticated registered user, provide for access to the non-registered user for operation of the electronic device in accordance with said signalling from the remote electronic device.

2. An apparatus according to claim 1 wherein said signalling from the biometric wearable remote electronic device comprises one or more of;
an access-level message received from the biometric wearable remote electronic device indicating a user selection of the biometrically authenticated registered user; and
a determined distance between the electronic device and the biometric wearable remote electronic device worn by the biometrically authenticated registered user.

3. An apparatus according to claim 1 or claim 2, wherein the electronic device provides a plurality of levels of access to the user, the plurality of levels including at least two or more of;
i) full access to the electronic device;
ii) access to a subset of a plurality of applications available for use at the electronic device;
iii) access to a predetermined application available for use at the electronic device;
iv) access to files available at the electronic device on a read-only basis;
v) access to one or more classes of application available for use at the electronic device;
vi) no access; and
the apparatus is configured to provide for access in accordance with one of the plurality of levels of access.

4. An apparatus according to claim 2, in which where access is provided based on the access-level message, provide for access in accordance with one of a plurality of different levels of access or to provide or deny access in accordance with an indication present in the access-level message.

5. An apparatus according to claim 2, in which where access is provided based on the determined distance between the electronic device and the remote electronic device, provide for a change in the access provided, in accordance with one of a plurality of different levels of access or to provide or deny access, based on the determined distance passing a predetermined distance threshold.

6. An apparatus according to claim 2, in which where access is provided based on the determined distance between the electronic device and the remote electronic device, provide for:
iv) a first level of access when the determined distance is less than a first predetermined distance threshold;
v) a second level of access different to the first when the determined distance is between the first predetermined distance threshold and a second predetermined distance threshold;
vi) a third level of access different to the first and second levels of access or prompting of the registered user via the remote electronic device for a user-desired level of access when the determined distance is greater than the second predetermined distance threshold.

7. An apparatus according to any preceding claim, wherein said signalling indicating that a non-registered user is operating the electronic device comprises one or more of:
signalling indicating that the or each biometrically authenticated, registered user is more than a predetermined distance from the electronic device while the electronic device is being used;
signalling indicating that a hand wearable biometric remote electronic device device associated with the registered user is not moving in accordance with user input provided to the electronic device;
signalling indicating that a captured image of a current user of the electronic device is not the registered user; and
signalling indicating that captured biometric information of a current user of the electronic device has not been authenticated as being a registered user.

8. An apparatus according to any preceding claim, wherein the apparatus is configured to provide for prompting of the registered user via their remote electronic device to provide an indication of the particular level of access to apply to the use by the non-registered user and based on a response to said prompting, provide access to the non-registered user in accordance with the level of access indicated in the response.

9. An apparatus according to any preceding claim, wherein the non-registered user has a remote electronic device associated with them able to provide a unique identity and the provision of access to the non-registered user for operation of the electronic device is further based on the continued detection of remote electronic device of the non-registered user.

10. An apparatus according to any preceding claim, wherein biometric authentication of the wearer of the remote electronic device is performed, in part, at the electronic device based on signalling received from the remote electronic device or the signalling received from the biometric wearable remote electronic device includes information that enables the electronic device to verify that the wearer of the remote electronic device is a registered user of the electronic device who has been biometrically authenticated.

11. An apparatus comprising:
at least one processor; and
at least one memory including computer program code,
the at least one memory and the computer program code configured to, with the at least one processor, cause the apparatus to perform at least the following:
in respect of an electronic device configured such that biometric authentication of the identity of a user is used to determine whether or not the user is a registered user and to correspondingly provide or deny access to the user for operation of the electronic device;
based on receipt of a prompt from the electronic device indicative of use of the electronic device by a non-registered user and biometric authentication of a wearer of a biometric wearable remote electronic device as a registered user of the electronic device, provide for sending of a message to the electronic device from the biometric wearable remote electronic device for use in providing access to the non-registered user of said electronic device for operation of the electronic device.

12. An apparatus according to claim 11, in which said message has one or more of the following characteristics;
said message comprising an access-level message and contains an indication from the registered user that access should be provided to the non-registered user;
said message comprises geographic location information or its form provides for a distance between the electronic device and the remote electronic device to be determined.

13. A method comprising
in respect of an electronic device configured such that biometric authentication of the identity of a user is used to determine whether or not the user is a registered user and to correspondingly provide or deny access to the user for operation of the electronic device;
based on signalling indicating that a non-registered user is operating the electronic device and signalling received from a biometric wearable remote electronic device worn by a biometrically authenticated registered user, providing for access to the non-registered user for operation of the electronic device in accordance with said signalling from the remote electronic device.

14. A method, the method comprising
in respect of an electronic device configured such that biometric authentication of the identity of a user is used to determine whether or not the user is a registered user and to correspondingly provide or deny access to the user for operation of the electronic device;
based on receipt of a prompt from the electronic device indicative of use of the electronic device by a non-registered user and biometric authentication of a wearer of a biometric wearable remote electronic device, providing for the sending of a message to the electronic device from the biometric wearable remote electronic device for use in providing access to the non-registered user of said electronic device for operation of the electronic device.

15. A computer readable medium comprising computer program code stored thereon, the computer readable medium and computer program code being configured to, when run on at least one processor, perform the method of at least claim 13 or claim 14.
